# EUROPÄISCHE PATENTSCHRIFT

(11) **EP 3 077 697 B1**
(45) Veröffentlichungstag und Bekanntmachung des Hinweises auf die Patenterteilung: **01.05.2019**
(21) Anmeldenummer: 14806226.8
(22) Anmeldetag: 27.11.2014
(51) Int. Cl.: F16D 65/18

(54) **ELEKTROMECHANISCH UND HYDRAULISCH BETÄTIGBARE KRAFTFAHRZEUGBREMSE MIT WAHLWEISER SELBSTHEMMUNG**
MOTOR VEHICLE BRAKE WHICH CAN BE ACTIVATED ELECTROMECHANICALLY AND HYDRAULICALLY AND HAS OPTIONAL SELF-LOCKING
FREIN DE VÉHICULE AUTOMOBILE POUVANT ÊTRE ACTIONNÉ HYDRAULIQUEMENT ET ÉLECTROMÉCANIQUEMENT AVANT AUTO-BLOCAGE OPTIONNEL

(30) Priorität: 06.12.2013 DE 102013020468
(43) Veröffentlichungstag der Anmeldung: 12.10.2016
(73) Patentinhaber: Lucas Automotive GmbH, 56070 Koblenz (DE)
(72) Erfinder: OHLIG, Benedikt, 56179 Vallendar (DE); POERTZGEN, Gregor, 56068 Koblenz (DE)
(74) Vertreter: Schmidt, Steffen J.
(86) Internationale Anmeldenummer: PCT/EP2014/075802
(87) Internationale Veröffentlichungsnummer: WO 2015/082299

(56) Entgegenhaltungen:
- WO-A1-2007/012515
- DE-A1- 19 818 157
- DE-A1-102011 086 152
- DE-A1-102011 102 860

## Beschreibung

Die Erfindung betrifft eine elektromechanisch und hydraulisch betätigbare Kraftfahrzeugbremse mit einer Aktuatorbaugruppe umfassend:
- ein Gehäuse,
- ein relativ zu dem Gehäuse verlagerbares Stellglied zum hydraulischen oder elektromechanischen Verlagern eines Bremsbelags,
- einen motorischen Antrieb,
- eine zwischen dem motorischen Antrieb und dem verlagerbaren Stellglied angeordnete Verlagerungsmechanik,
- eine der Verlagerungsmechanik zugeordnete Getriebeanordnung und
- eine separate Selbsthemmungsvorrichtung, die dazu ausgebildet ist, die Verlagerungsmechanik bei Bedarf zu blockieren,
wobei die Verlagerungsmechanik einen Kugelgewindetrieb mit einer Spindel und einer Mutter aufweist, wobei wahlweise die eine Komponente von Spindel und Mutter drehantreibbar ist und die jeweils andere Komponente von Spindel und Mutter zur Verlagerung des Stellglieds durch Drehantreiben einer Komponente von der Spindel und Mutter innerhalb des Gehäuses linear verlagerbar ist.

Seit geraumer Zeit werden Kraftfahrzeugbremsen eingesetzt, bei denen im Falle einer normalen Betriebsbremsung während der Fahrt des Fahrzeugs die Bremsbeläge in gewohnter Weise hydraulisch verlagert werden, bei denen aber auch zur Aktivierung einer Feststellbremsfunktion eine elektromechanische Verlagerung der Bremsbeläge oder zumindest ein elektromechanisch ausgelöstes Blockieren der Bremsbeläge in einer Bremsstellung erfolgt. Derartige Kraftfahrzeugbremsen bieten den Vorteil, dass die Feststellbremsfunktion komfortabler durch einfaches Betätigen eines Aktivierungsschalters aktiviert oder gelöst werden kann.

Derartige elektromechanisch und hydraulisch betätigbare Kraftfahrzeugbremsen sind aus dem Stand der Technik bekannt.

So beschreibt das Dokument WO 2008/037738 A1 eine sowohl hydraulisch als auch elektromechanisch betätigbare Kraftfahrzeugbremse. In einer Normalbetriebssituation, das heißt während der Fahrt des Kraftfahrzeugs, wird diese Kraftfahrzeugbremse in üblicher Weise hydraulisch betätigt. Zur Aktivierung einer Feststellbremse wird allerdings die elektromechanische Betätigungsfunktion aktiviert. Dabei wird ein Elektromotor angesteuert, der über eine Verlagerungsmechanik mit einer Getriebeanordnung eine Spindel-Mutter-Anordnung antreibt. Die Getriebeanordnung ist mit einem Schneckenradgetriebe selbsthemmend ausgebildet, um zu verhindern, dass sich bei aktivierter Feststellbremse die Feststellbremswirkung reduziert. Die Selbsthemmung hat aber den Nachteil, dass nur sehr geringe Wirkungsgrade erreicht werden können, so dass die Komponenten, insbesondere der Elektromotor relativ stark ausgelegt werden müssen und eine hohe Stromaufnahme haben. Es gilt, dass sich der gesamte Wirkungsgrad des Systems aus einem Produkt der Einzelwirkungsgrade der Komponenten zusammensetzt. So ergibt sich dieser Gesamtwirkungsgrad beispielsweise aus dem Produkt des Wirkungsgrads des Motors, des Wirkungsgrads der nachgeschalteten Getriebeanordnung und der Spindel-Mutter-Anordnung. Bei Getriebeanordnungen mit Selbsthemmungseffekt lassen sich so nur Gesamtwirkungsgrade im Bereich von 30 % und weniger erreichen.

Das Dokument DE 10 2012 208 294 A1 beschreibt eine Fahrzeugbremse, bei der eine separate Selbsthemmungsvorrichtung unmittelbar an der Mutter-Spindelanordnung angeordnet ist. Insbesondere wird auf die Fig. 8 dieses Dokuments verwiesen. Dort ist gezeigt, dass die als Kupplungsvorrichtung 41 bezeichnete Selbsthemmungsvorrichtung zwischen dem Wälzkörperrampengetriebe und den Bremskolben angeordnet ist. Eine solche unmittelbare räumliche Zuordnung der Selbsthemmungsvorrichtung zu der Mutter-Spindelanordnung eines Kugelgewindetriebs hat den Nachteil, dass die bei der Aktivierung der Bremse und bei der Aufrechterhaltung eines (Feststell-) Bremszustand auftretenden Reaktionskräfte von der Selbsthemmungsvorrichtung in voller Größe getragen werden müssen. Die Selbsthemmungsvorrichtung ist dementsprechend massiv auszuführen, was zur Folge hat, dass sie erheblichen Bauraum einnimmt. Dies führt dazu, dass die Bremse insbesondere in axialer Richtung bezüglich der Gewindespindel verhältnismäßig groß zu dimensionieren ist.

Ferner zeigt das Dokument DE 10 2011 102 860 A1 eine gegenüber diesem Stand der Technik verbesserte Fahrzeugbremse, bei der die Selbsthemmungsvorrichtung zwar nahe der Mutter-Spindelanordnung angeordnet ist, jedoch in die Getriebeanordnung integriert ist, so dass Bauraum in axialer Richtung bezüglich der Gewindespindel eingespart werden kann. Diese Bremse lässt sich kompakter ausgestalten.

Das Dokument DE 10 340 250 A1 beschreibt eine elektrische Parkbremse für ein Kraftfahrzeug, die einen ersten elektrischen Antrieb umfasst. Der erste elektrische Antrieb dient dem Umschalten der Parkbremse zwischen einer Wirkstellung und einer gelösten Stellung. Um den Wirkungsgrad der Parkbremse gegenüber bekannten Parkbremsen mit einer selbsthemmenden Getriebestufe zu verbessern, sieht die Anordnung eine weitere Komponente in Form eines zweiten Antriebs vor. Dieser zweite Antrieb ist zwischen einer Hemmstellung und einer die Parkbremse freigebenden Stellung bewegbar. Der erste Antrieb ist in dieser Anordnung frei von Selbsthemmung.

DE 19 750 420 A1 beschreibt eine elektrisch betätigbare Bremse für ein Kraftfahrzeug, die eine Feststelleinrichtung umfasst. Die Feststelleinrichtung weist ein Klinkenrad auf, das drehfest mit einem Antrieb der Bremse verbunden ist. Zudem umfasst die Feststelleinrichtung zwei in das Klinkenrad einrückbare Sperrklinken. Diese Sperrklinken sind über einen motorischen Antrieb verlagerbar, um das Klinkenrad und damit die Bremse durch Eingriff der Sperrklinken in das Klinkenrad mechanisch festzustellen.

Weiterer Stand der Technik ist aus dem Dokument DE 10 2011 084 190 A1 bekannt. Dieses offenbart eine elektrisch betätigbare Kraftfahrzeugbremse mit einer Feststellbremsvorrichtung. Die Feststellbremsvorrichtung ist dazu eingerichtet, die Kraftfahrzeugbremse stromlos in einer Feststellbremsstellung zu halten. Dazu wirkt ein drehfest angeordneter Dauermagnet mit einem Joch zusammen, das in einem Antriebsstrang der Bremse vorgesehen ist. Permanente magnetische Anziehungskräfte bewirken somit eine berührungslose Drehhemmung in dem Antriebsstrang. Die Feststellbremsvorrichtung ist abstellbar, indem ein Magnetfeld erzeugt wird, das dem magnetischen Feld des Dauermagneten entgegengerichtet ist und die Wirkung des Dauermagneten somit neutralisiert.

Das Dokument DE 198 18 157 A1 offenbart eine elektromechanische Radbremsvorrichtung, umfassend ein Kegelradgetriebe mit einem Tellerrad, welches sich über ein eigenes Axiallager in einem steif ausgebildeten Getriebegehäuse abstützt.

Das Dokument WO 2007/012515 A1 offenbart eine elektromechanische Scheibenbremse, die zur Ausbildung als Feststellbremse einen schaltbaren Freilauf (Klemmrollenfreilauf mit Rollen) aufweist.

Weiterer technologischer Hintergrund findet sich schließlich in dem Dokument DE 10 2011 086152 A1.

Es ist Aufgabe der vorliegenden Erfindung, eine Kraftfahrzeugbremse bereitzustellen, die sich sowohl als Betriebsbremse als auch als Feststellbremse nutzen lässt und die hinsichtlich des Kraftflusses und der Dimensionierung gegenüber dem Stand der Technik weiter optimiert ist.

Diese Aufgabe wird durch eine Kraftfahrzeugbremse der eingangs bezeichneten Art gelöst, bei der vorgesehen ist, dass die Selbsthemmungsvorrichtung in den motorischen Antrieb integriert ist.

Die Erfindung hat den Vorteil, dass die gesamte Getriebanordnung mit ihrer durch die darin enthaltenen Getriebstufen erzielten Übersetzung bzw. Untersetzung dazu ausgenutzt werden kann, um die von den Bremsbelägen herrührenden Reaktionskräfte zu reduzieren, so dass die Selbsthemmungsvorrichtung kleiner dimensioniert werden kann. Darüber hinaus ergibt die erfindungsgemäße Anordnung der Selbsthemmungsvorrichtung im Abstand von der Gewindespindel mehr Freiheiten, um die gesamte Kraftfahrzeugbremse kleiner zu dimensionieren, da die Selbsthemmungsvorrichtung an einer Stelle - nämlich innerhalb des motorischen Antriebs angeordnet werden kann, wo sie weniger Bauraum fordert.

Ein weiterer Vorteil der Erfindung besteht darin, dass der Gesamtwirkungsgrad der Fahrzeugbremse gegenüber dem Stand der Technik verbessert werden kann, insbesondere deshalb, weil die Getriebeanordnung oder der Kugelgewindetrieb selbst nicht mehr selbsthemmend ausgeführt werden müssen. Somit lassen sich für die Kraftübertragung Wirkungsgrade von deutlich über 50 % erreichen, was ebenfalls dazu beiträgt, dass der motorische Antrieb mit geringerer Stromaufnahme, schwächer und damit auch kleiner bauend ausgelegt werden kann.

Eine bevorzugte Ausführungsform der Erfindung sieht vor, dass die Getriebeanordnung wenigstens zwei Getriebestufen, vorzugsweise drei oder vier Getriebestufen, aufweist. Die Wahl von wenigstens zwei, vorzugsweise drei oder vier Getriebestufen ermöglicht es, zu Gunsten einer relativ kleinen Dimensionierung des motorischen Antriebs ein verhältnismäßig großes Übersetzungsverhältnis zu erzielen, wobei dennoch die Verlagerungsmechanik relativ kompakt ausgebildet werden kann. Diese Anzahl von Getriebestufen erlaubt auch eine kleine Dimensionierung der Selbsthemmungsvorrichtung innerhalb des motorischen Antriebs.

Vorzugsweise ist erfindungsgemäß vorgesehen, dass die Selbsthemmungsvorrichtung in Abhängigkeit von einer Bestromung des motorischen Antriebs aktivierbar und deaktivierbar ist. Mit anderen Worten kann die Selbsthemmungsvorrichhtung beispielsweise immer dann aktiv deaktiviert werden, wenn der motorische Antrieb bestromt wird. Sie kann dann schaltungstechnisch mit dem motorischen Antrieb gekoppelt sein. Wird der motorische Antrieb zum Aktivieren oder Deaktivieren der Bremse bestromt, so wird dann die Selbsthemmungsvorrichtung automatisch deaktiviert. Wird der motorische Antrieb nicht länger bestromt, so wird die Selbsthemmungsvorrichtung aktiv und blockiert den Aktuator durch ihren Selbsthemmungseffekt gegen eine Verlagerung. Ein unbeabsichtigtes Lösen der Bremse wird dadurch wirkungsvoll unterbunden.

Dies kann erfindungsgemäß beispielsweise dadurch erreicht werden, dass dass die Selbsthemmungsvorrichtung durch einen Federmechanismus in einen Zustand vorgespannt ist, in dem sie unter der Federwirkung die Verlagerungsmechanik blockiert. Der Federmechanismus sorgt also durch seine Vorspannwirkung für eine zuverlässige Überführung der Selbsthemmungsvorrichtung in den blockierenden Zustand.

Ferner kann in diesem Zusammenhang vorgesehen sein, dass die Selbsthemmungsvorrichtung mit einem Elektromagneten versehen ist, der bei Bestromung des motorischen Antriebs aktiviert wird und gegen die Wirkung des Federmechanismus die Selbsthemmungsvorrichtung in einen nicht blockierenden Zustand schaltet. Dabei ist es erfindungsgemäß möglich, dass der Elektromagnet in den motorischen Antrieb integriert ist. Bei dieser Erfindungsvariante kann ein sehr kompakter Aufbau erzielt werden. Alternativ kann der Elektromagnet auch außerhalb des motorischen Antriebs angeordnet werden.

Eine bevorzugte Weiterbildung der Erfindung sieht vor, dass die Selbsthemmungsvorrichtung derart angeordnet ist, dass die beim Blockieren der Verlagerungsmechanik auftretenden Reaktionskräfte mittelbar oder unmittelbar in das Gehäuse des Aktuators oder in ein Gehäuse des motorischen Antriebs ableitbar sind. Daraus ergibt sich ein vorteilhafter Kraftfluß, der eine leichtgewichtige Gehäusegestaltung ermöglicht.

Hinsichtlich der konstruktiven Ausgestaltung ist gemäß der Erfindung vorgesehen, dass die Selbsthemmungsvorrichtung eine Bremsscheibe aufweist, die mit einer den Anker tragenden (Ausgangs-)Welle des motorischen Antriebs drehfest gekoppelt ist, wobei dem Gehäuse des Aktuators oder dem Gehäuse des motorischen Antriebs wenigstens ein Reibbelag zugeordnet ist, der zum Erzielen der Selbsthemmung in Wechselwirkung mit der Bremsscheibe bringbar ist. In diesem Zusammenhang ist es erfindungsgemäß ferner möglich, dass die (Ausgangs-)Welle drehbar und axial verlagerbar gelagert ist, wobei die Selbsthemmungsvorrichtung nach Maßgabe einer Bestromung des motorischen Antriebs durch axiales Verlagern der (Ausgangs-)Welle zwischen einem blockierenden Zustand und einem nicht blockierenden Zustand hin- und her schaltbar ist.

Eine bevorzugte Ausführungsvariante der Erfindung sieht vor, dass die Getriebeanordnung einen Planetengetriebemechanismus aufweist. Ferner kann in diesem Zusammenhang erfindungsgemäß vorgesehen sein, die Ausgangswelle mit einem Sonnenrad des Planetengetriebemechanismus antriebsmäßig gekoppelt ist, wobei ein Hohlrad des Planetengetriebemechanismus gehäusefest angeordnet ist, und wobei Planetenräder des Planetengetriebemechanismus an einem im Gehäuse drehbar gelagerten Planetenträger drehbar gelagert sind.

Die Erfindung wird im Folgenden beispielhaft anhand der folgenden Figuren erläutert. Es stellen dar:
- Fig. 1: eine räumliche Außenansicht für eine Aktuatorbaugruppe zur Erläuterung der technischen Hintergründe der erfindungsgemäßen Kraftfahrzeugbremse;
- Fig. 2: eine achsenthaltende Schnittansicht durch eine Aktuatorbaugruppe einer Kraftfahrzeugbremse gemäß dem Stand der Technik zur Erläuterung des Funktionsprinzips derartiger Bremsen;
- Fig. 3: eine freigeschnittene Ansicht des Elektromotors, der Getriebeanordnung und der Spindel aus Fig. 2;
- Fig. 4: eine Explosionsansicht zur Erläuterung der Schlingfederkupplung aus Fig. 2 und 3;
- Fig. 5: eine achsorthogonale Schnittansicht der Anordnung aus zwei Getrieberädern mit Schlingfederkupplunggemäß der Bremse nach Figuren 2 bis 4;
- Fig. 6: eine schematische Ansicht für eine Ausführungsvariante der Erfindung, bei der die Selbsthemmungsvorrichtung in den elektromotorischen Antrieb integriert ist;
- Fig. 7a, b: schematische Ansichten eines blockierten Zustands (Fig. 7a) und eines nicht blockierten Zustands (Fig. 7b) für die Implentierung einer Ausführungsvariante der Erfindung gemäß Figur 6, bei der die Selbsthemmungsvorrichtung in dem motorischen Antrieb intergiert ist; und
- Fig. 8a, b: schematische Ansichten eines blockierten Zustands (Fig. 8a) und eines nicht blockierten Zustands (Fig. 8b) für die Implentierung einer alternativen Ausführungsvariante der Erfindung gemäß Figur 6, bei der die Selbsthemmungsvorrichtung in dem motorischen Antrieb intergiert ist

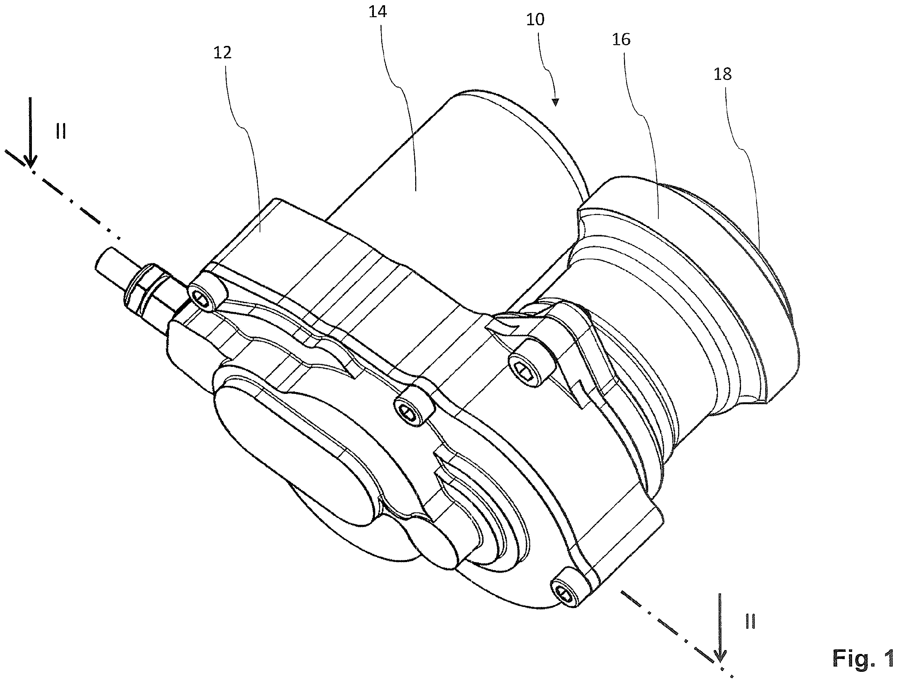

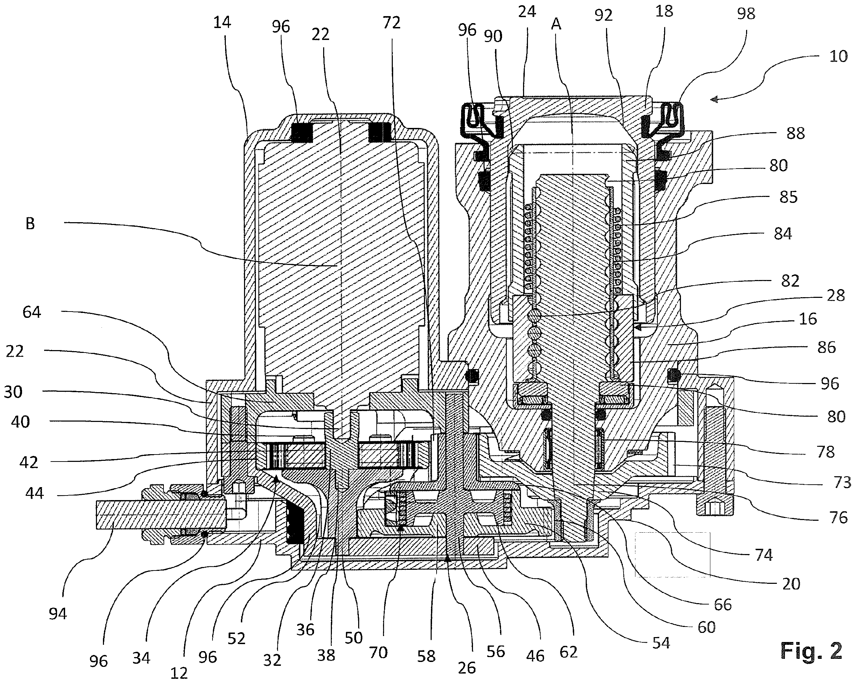

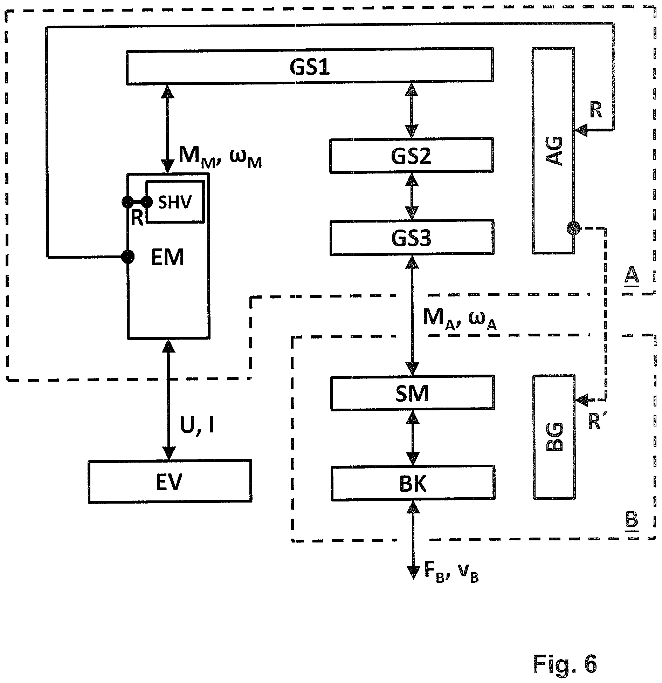

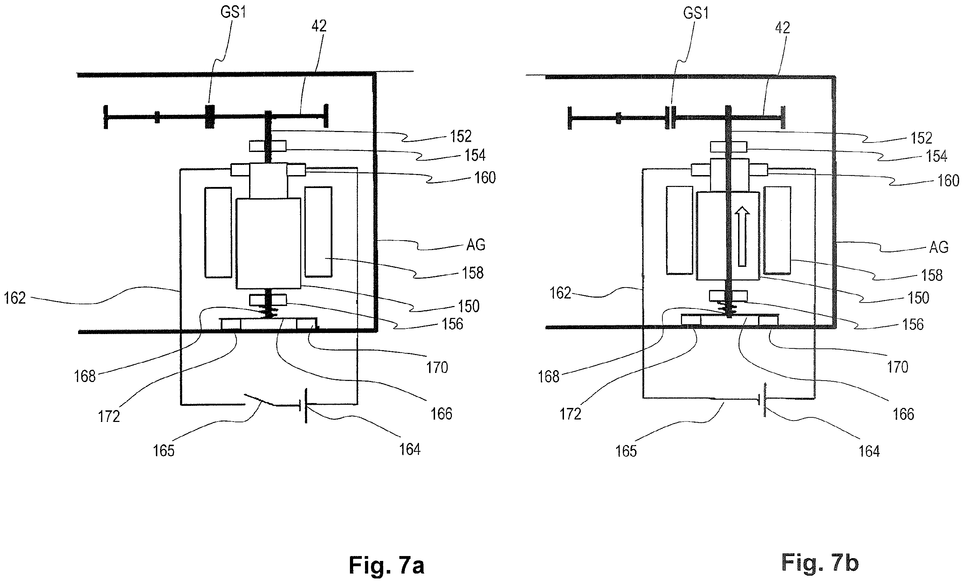

In Figur 1 ist eine Aktuatorbaugruppe einer Kraftfahrzeugbremse in räumlicher Darstellung gezeigt und allgemein mit 10 bezeichnet. Die Figuren 2-5 dienen zur Erläuterung der technischen Hintergründe der Erfindung. Die eigentlichen beispielhaften Ausführungsformen werden mit Bezug auf Figuren 6 und 7 beschrieben.

Figur 1 zeigt ein Gehäuse 12, in dem eine Getriebeanordnung angeordnet ist, sowie ein Teilgehäuse 14 zur Unterbringung eines Antriebsmotors und ein weiteres Teilgehäuse 16, in dem ein verschiebbarer Kolben 18 angeordnet ist, mit dem ein nicht gezeigter Bremsbelag in einer Bremseinheit einer Kraftfahrzeugbremse bremswirksam verschoben werden kann. Die in Figur 1 gezeigte Aktuatorbaugruppe 10 der erfindungsgemäßen Kraftfahrzeugbremse lässt sich in üblicher Weise beispielsweise in eine Schwimmsattelbremse einbauen. Hierzu wird auf das Dokument WO 2009/046899 A1 verwiesen, in dem eine solche Einbausituation exemplarisch gezeigt ist. Dieses Dokument ist eine Anmeldung der vorliegenden Anmelderin. Da es im Folgenden auf die Aktuatorbaugruppe bestehend aus motorischem Antrieb und Verlagerungsmechanik zur Verlagerung des Bremsbelags ankommt, konzentriert sich die folgende Beschreibung auf diese Komponenten. Auch in den Figuren sind nur entsprechende Komponenten gezeigt.

Figur 2 zeigt eine achsenthaltende Querschnittansicht durch die in Figur 1 gezeigte Antriebseinheit 10. Man erkennt, dass das Gehäuse 12 mehrteilig aufgebaut ist und sich aus einem Gehäusedeckel 20, dem Teilgehäuse 14 zur Aufnahme eines Elektromotors 22 und dem Teilgehäuse 16 zur verlagerbaren Aufnahme des Kolbens 18 zusammensetzt. Der Kolben 18 ist entlang der Längsachse A in an sich bekannter Weise hydraulisch und elektromechanisch verlagerbar. Seine exponierte Oberfläche 24 wirkt in üblicher Weise mit einer nicht gezeigten Bremsbelaganordnung zum Erzielen einer Bremswirkung zusammen. Eine hydraulische Verlagerung erfolgt in bekannter Weise während der Betriebsbremsung. Eine elektromechanische Verlagerung erfolgt zum Aktivieren und Lösen der Feststellbremsfunktion.

Im Folgenden soll im Detail auf die elektromechanische Verlagerungsmechanik eingegangen werden.

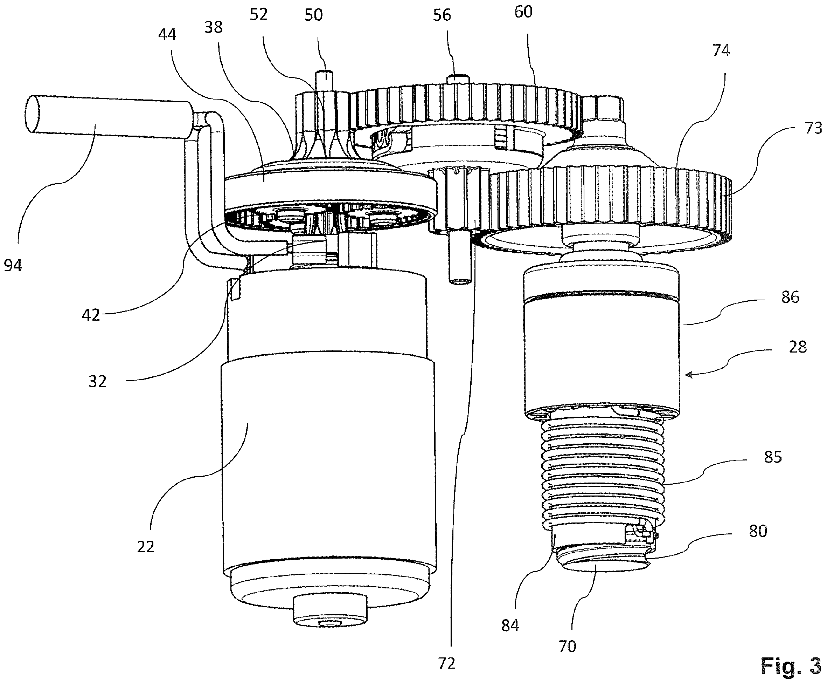

Die Verlagerungsmechanik umfasst eine Getriebeanordnung 26 sowie eine Mutter-Spindel-Anordnung 28. Beide Grundkomponenten der Verlagerungsmechanik sind zusammen mit dem Elektromotor 22 freigeschnitten in Figur 3 dargestellt. Die Getriebeanordnung 26 dient dazu, um eine Drehbewegung des Elektromotors 22 in eine entsprechende Linearbewegung des Kolbens 18 entlang der Längsachse A umzusetzen. Im Einzelnen weist der Elektromotor 22 eine sich entlang der Motorlängsachse B erstrecken der Motorausgangswelle 30 auf. Diese ist mit einem Zahnrad 32 drehfest gekoppelt. Das Zahnrad 32 dient als Sonnenrad eines Planetengetriebes 34. Das Zahnrad 32 weist in seinem motorfernen Ende einen Lagerzapfen 36 auf. Auf diesem Lagerzapfen 36 ist drehbar ein Planetenträger 38 gelagert, der seinerseits wieder mehrere Lagerzapfen 40 aufweist. Die Lagerzapfen 40 dienen dazu, um Planetenräder 42 zu lagern, die mit dem Zahnrad 32 in kämmendem Eingriff stehen.

Radial außerhalb der Planetenräder 42 ist ein Hohlrad 44 gehäusefest angeordnet. Hierzu dient ein weiteres Gehäuseteil 46. Der Planetenträger 38 ist in diesem Gehäuseteil 46 mit einem Lagerzapfen 50 drehbar gelagert. Er weist zwischen den Lagerzapfen 40 und seinem Lagerzapfen 50 eine Außenverzahnung 52 auf. Diese Außenverzahnung 52 kämmt mit einem ersten Getrieberad 54, das auf einem gehäusefesten Stator 56 über einen radial inneren Lageabschnitt 58 drehbar gelagert ist und an seinem Außenumfang eine Außenverzahnung 60 aufweist. Das Getrieberad 54 ist topfartig ausgebildet. In seinem Inneren erstreckt sich ein Reibradabschnitt 62, der an dem Stator 56 angeformt und damit ebenfalls drehfest im Gehäuse 12, insbesondere drehfest am Gehäuseteil 46 und einem weiteren Gehäuseteil 64, angebracht ist, beispielsweise durch Einpressen. Auf dem Stator 56 ist ein zweites Getrieberad 66 drehbar gelagert. Dieses zweite Getrieberad 66 kann bei diesem Bremsentyp über eine Schlingfederkupplung 70 zur Drehmomentübertragung mit dem ersten Getrieberad 54 gekoppelt werden. Hierauf wird im Folgenden noch im Detail eingegangen. Das zweite Getrieberad 66 weist an seinem vom ersten Getrieberad 54 abgewandten Abschnitt eine Außenverzahnung 72 auf. Diese kämmt mit einer Außenverzahnung 73 eines Abtriebszahnrads 74, das drehfest auf einer Spindel 76 der Mutter-Spindel-Anordnung 28 gelagert ist.

Man erkennt in Figur 2, dass die Spindel 76 über ein Radialnadellager 78 und ein Axiallager in dem Gehäuseteil 16 gelagert ist. Die Spindel 76 weist an ihrem Außenumfang eine Gewindeformation 80 auf, in der Wälzkörper 82 aufgenommen sind. Die Wälzkörper 82 sind in einem Wälzkörperkäfig 84 gehalten, der über eine Schraubenfeder 85 in seine in Figur 2 und 3 gezeigte Ausgangsstellung vorgespannt ist. Auf den Wälzkörpern 82 lagert eine Mutter 86, die bei einer Drehbewegung der Spindel 76 in üblicher Weise eine Linearbewegung innerhalb des Gehäuseteils 16 ausführt. Die Mutter 86 ist fest mit einem Koppelelement 88 verbunden, das sich bei der Bewegung der Mutter 86 entsprechend mit verlagert. Das Koppelelement 88 weist an seinem freien Ende eine konische Koppelfläche 90 auf, die mit einer korrespondierenden Kolbenfläche 92 im Inneren des Kolbens des 18 in Eingriff bringbar und zusammen dem Kolben 18 zur Verlagerung desselben und damit zur Verlagerung des nicht gezeigten Bremsbelags verschiebbar ist.

Ferner erkennt man in Figur 2 ein Anschlusskabel 94, sowie verschiedene Dichtungen 96 um die Gehäuseteile zueinander und daran angeschlossene Komponenten abzudichten bzw. gedichtet zu führen. Schließlich erkennt man noch dass der Kolben 18 mit einem Balg 98 gedichtet ist.

In den Figuren 2 und 3 erkennt man Einzelheiten der Verlagerungsmechanik.

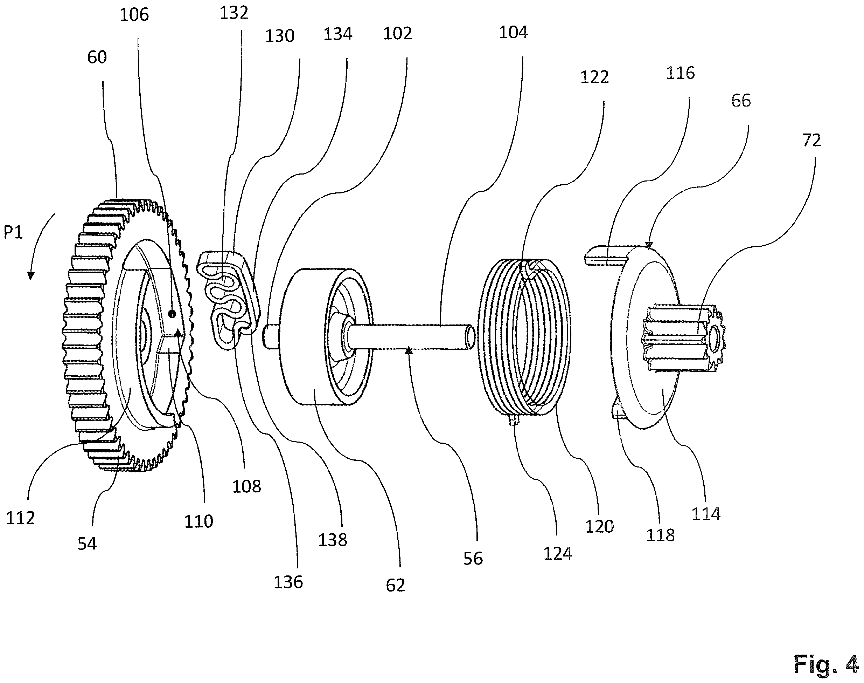

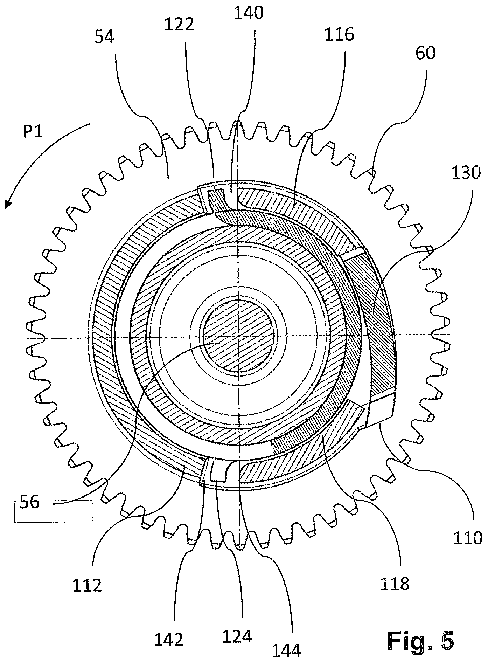

Wendet man sich nun den Figuren 4 und 5 zu, so erkennt man darin den Aufbau und die einzelnen Komponenten der Schlingfederkupplung 70. Im Inneren der Schlingfederkupplung 70 ist der Stator 56 mit seinem Reibradabschnitt 62 vorgesehen. Wie bereits ausgeführt, ist der Stator 56 gehäusefest und damit unverdrehbar über zwei Lagerzapfen 102, 104 im Gehäuse gelagert. Auf dem Stator 56 lagert das erste Getrieberad 54. Dieses weist an seinem Außenumfang die Außenverzahnung 60 auf und ist im Inneren mit einem Hohlraum 106 versehen. Der Hohlraum 106 ist mit einer seitlichen Tasche 108 mit Anlagefläche 110 versehen. Ferner erstreckt sich von einer Seitenfläche des ersten Getrieberads 54 aus eine kreissegmentförmige Klaue 112.

Das zweite Getrieberad 66 weist neben seiner Außenverzahnung 72 eine plattenartige Struktur 114 auf, an der eine erste Klaue 116 und eine zweite Klaue 118 angeordnet sind, die sich in axialer Richtung erstrecken. Ferner erkennt man in Figur 4 eine Schraubenfeder 120 mit abgekröpften Enden 122 und 124. Die Schraubenfeder 120 ist derart dimensioniert, dass sie im entspannten Zustand an der Außenumfangsfläche des Reibradabschnitts 62 satt anliegt, jedoch auf dieser abgleiten kann. Zur Montage wird die Schraubenfeder 120 auf den Reibradabschnitt 62 aufgesteckt. Diese Anordnung wird im Hohlraum 106 aufgenommen. Die beiden abgekröpften Enden 122 und 124 erstrecken sich in radialer Richtung so weit nach außen, dass sie, wie im Folgenden im Detail erläutert werden wird, mit den Klauen 112, 116, 118 in Eingriff bringbar sind, ohne dass sie an den den Hohlraum 106 begrenzenden Flächen entlangreiben oder kratzen.

Ferner erkennt man in Figur 4 eine Formfeder 130 mit mehreren gewundenen Schlingen 132, die sich entlang eines Basisstrangs 134 erstrecken. Die beiden Enden 136, 138 greifen ineinander. Die gewundenen Schlingen 132 lassen sich bei Einwirkung einer Kraft F aus ihrer entspannten Stellung in eine komprimierte Stellung komprimieren. Die Formfeder 130 ist in der Tasche 108 angeordnet und liegt mit ihrer letzten Schlinge an der Anlagefläche 110 an.

Man erkennt den zusammengebauten Zustand der Schlingfederkupplung 70 in Figur 5, wobei zu ergänzen ist, dass das abgekröpfte Federende 122 zwischen der Klaue 116 und der Klaue 118 in dem Zwischenraum 140 aufgenommen ist.

Generell wird die vorstehend beschriebene Kraftfahrzeugbremse mit ihrer vorstehend beschriebenen Aktuatorbaugruppe vornehmlich zur Aktivierung einer Feststellbremsfunktion eingesetzt. Dies bedeutet, dass im Betriebsbremsfall der Kolben 18 üblicherweise hydraulisch derart verlagert wird, dass er sich aus dem Gehäuseteile 16 heraus verlagert. Gleichermaßen muss es möglich sein, dass sich der Kolben 18 wieder bei Freigabe des Motors 22 zum Lösen der Bremse im Betriebsbremsfall teilweise oder ganz in seine Ausgangsposition gemäß Figur 2 zurück verlagert. Dies geschieht in der Regel allein durch die Wirkung einer Entspannung am nicht gezeigten Bremsbelags sowie unter Vermittlung der Rückstellfeder 85, ohne dass hierzu ein motorischer Antrieb vom Elektromotor 42 erforderlich wäre. Für den Betriebsbremsfall sei angemerkt, dass relativ geringe Spannkräfte erforderlich sind.

In einer Feststellbremssituation wird der Kolben 18 mit relativ großer Spannkraft zur Erzeugung einer Feststellbremswirkung verlagert und soll in dieser Position dauerhaft gehalten werden, um das Kraftfahrzeug sicher festzustellen. Die erreichte Kolbenposition ist zur Beibehaltung der Feststellbremswirkung unbedingt aufrechtzuerhalten und es ist zu vermeiden, dass sich der Kolben 18 im Laufe der Zeit durch Setzvorgänge in der Getriebeanordnung 26 zurück verlagert. Erst dann, wenn eine aktive Ansteuerung über den Motor 22 erfolgt mit der die Feststellbremse aktiv gelöst werden soll, kann sich der Kolben 18 wieder in seine Ausgangsposition gemäß Figur 2 zurück verlagern.

Es muss also unterschieden werden zwischen der Betriebsbremssituationen und der Feststellbremssituation, wobei je nach aktuellem Zustand der Bremse ein Kraftfluss vom Kolben 16 zum Motor 22 hin zuzulassen oder zu unterbinden ist. Um dieser Anforderung gerecht zu werden, wird die Schlingfederkupplung 70 in der gezeigten Weise eingesetzt. Die Schlingfederkupplung 70 funktioniert in Wechselwirkung mit den beiden Getrieberädern 54 und 66 wie folgt:
- Zunächst sei der Kraftfluss vom motorseitigen Getrieberad 54 aus betrachtet, d.h. der Fall, bei dem der Motor 22 angetrieben wird und das Getrieberad 54 unter Vermittlung des Planetengetriebes 34 drehantreibt. Hier gibt es zwei Drehrichtungen, nämlich die Drehrichtung des Getrieberads 54 im Gegenuhrzeigersinn zum Spannen der Bremse (Spannen der Betriebsbremse und der Feststellbremse) und die Drehrichtung des Getrieberad 54 im Uhrzeigersinn zum aktiven Lösen der Bremse (Lösen der Feststellbremse).
- Bei einer Drehung des ersten Getrieberads 54 im Gegenuhrzeigersinn entsprechend Pfeil P1 - dies entspricht einer Bewegung zum Verlagern des Kolbens 18 aus dem Gehäuse 16 heraus, d.h. zum Aktivieren der Bremse über den Motor 22 sowohl in einer Betriebsbremssituation als auch in einer Feststellbremssituation - wird die Formfeder 130 über die Anlagefläche 110 gegen die Klaue 116 verschoben. Je größer der Widerstand wird, den die Klaue 116 einer solchen Verschiebung entgegensetzt (d.h. bei steigenden Spannkräften), desto stärker wird die Formfeder 130 komprimiert. Die Schraubenfeder 120 bleibt bei dieser Betätigung im Gegenuhrzeigersinn entsprechend Pfeil P1 wirkungslos, weil ihre Federenden sich frei in dem Spielraum zwischen den Klauen 112, 116 und 118 bewegen können und sie auf dem Reibradabschnitt 62 abgleitet.
- Treten größere Spannkräfte auf, wie dies bei der Aktivierung der Feststellbremse der Fall ist, wenn über den Kolben 18 die Bremsbeläge stark an die Bremsscheibe gedrückt werden müssen, so wird die Formfeder 130 stärker komprimiert. Wenn die Formfeder 130 in Folge einer Drehung entsprechend Pfeil P1 stärker komprimiert wird bedeutet dies, dass sich nun das erste Getrieberad 54 relativ zum zweiten Getrieberad 56 entsprechend der Komprimierung der Formfeder 130 verlagert hat. Die maximale Relatiwerlagerung ist dadurch bestimmt, dass sich die Klaue 112 mit ihrer Stirnseite 142 unter Vermittlung des abgekröpften Endes 124 an die Klaue 118 und deren Stirnseite 144 anlegt. Ist dieser Zustand erreicht, so ist die Formfeder 130 maximal komprimiert und es wird jede weitere Drehung des Elektromotors 22 über die Getriebeanordnung 26 zur Mutter-Spindel-Anordnung 28 zum weiteren Zuspannen der Feststellbremse übertragen.
- Ist die Feststellbremse zugespannt, so wirken aus der Spannkraft resultierende Reaktionskräfte auf das Getriebe zurück. Diese Reaktionskräfte, die über die Mutter-Spindel-Anordnung 28, das Abtriebszahnrad 74 und die Außenverzahnung 72 auf die Klauen 116 und 118 übertragen werden, versuchen die Klauen 116, 118 in ihre Ausgangsstellung zurückzudrängen, d.h. im Gegenuhrzeigersinn zu bewegen. Sobald aber die Klaue 116 versucht, in ihren Ausgangszustand zurückzukehren, d.h. sich im Gegenuhrzeigersinn zu bewegen, gelangt sie in Eingriff mit dem gekröpften Ende 122 der Schraubenfeder 120. In Folge dieses gegenseitigen Eingriffs wird unter der Bewegungstendenz der Klaue 116 im Gegenuhrzeigersinn die Schraubenfeder 120 um den Reibradabschnitt 62 zugezogen, so dass sich deren Schlingen verengen und an der Außenumfangsfläche des Reibradabschnitts 62 stärker angreifen. Dieses Umschlingen der Außenumfangsfläche des Reibradabschnitts 62 führt dazu, dass die Schraubenfeder 120 nicht weiter auf diese außen Umfangsfläche abgleiten kann, sondern sozusagen an dieser festhält. Demzufolge kann sich die Klaue 116 nicht in ihre Ausgangsstellung zurück bewegen. Die Feststellbremse bleibt aktiviert. Ein Setzvorgang ist damit ausgeschlossen.
- Zum Lösen der Feststellbremse ist wiederum eine Ansteuerung des Motors 22 erforderlich. Diese erfolgt derart, dass das Getrieberad 54 im Uhrzeigersinn gedreht wird. Bewegt sich das Getrieberad 54 im Uhrzeigersinn entsprechend Pfeil P2 - dies entspricht einer Bewegung zum Verlagern des Kolbens 18 in das Gehäuse 16 hinein, d.h. zum aktiven Lösen der Bremse über den Motor 22 beim Deaktivieren der Feststellbremse - so bewegt sich entsprechend die Klaue 112 ebenfalls im Uhrzeigersinn und löst die Spannung an der Formfeder 130. Darüber hinaus wird die Schraubenfeder 120 gelöst und gibt die Klaue 118 frei. Diese kann sich - der Klaue 112 folgend - zurück bewegen, was unter der Wirkung der Rückstellfeder 85 erfolgt.

Die Schlingfederkupplung 70 hat also die generelle Wirkung, dass sie für die Feststellbremsfunktion sicherstellt, dass eine Drehmomentübertragung vom Motor zur Mutter-Spindel-Anordnung auch bei hohen Spannkräften erfolgt und dass Setzeffekte oder ein unbeabsichtigtes Lösen der Feststellbremse durch die Wirkung der Schlingfederkupplung 70, insbesondere durch die Wirkung der sich dann zuziehenden und fest auf der Außenumfangsfläche des Reibradabschnitt 62 angreifenden Schraubenfeder 120, verhindert wird.

Soll lediglich eine Feststellbremsfunktion realisiert werden, wobei die Betätigung im Betriebsbremsfall rein hydraulisch erfolgt, so ist die Formfeder 130 eine Option und kann weggelassen werden.

Soll mit der Bremse sowohl eine Betriebsbremsfunktion also eine Feststellbremsfunktion unter elektromechanischer Aktivierung vorgesehen sein, so wird aber zusätzlich die Formfeder 130 eingesetzt, die sich in Abhängigkeit von dem aktuellen Spannungszustand mehr oder weniger stark deformiert. Bei geringen Spannkräften, wie sie üblicherweise während einer Betriebsbremsung auftreten, wird die Formfeder 130 überhaupt nicht oder nur in geringem Maße deformiert, so dass sie sozusagen die Schraubenfeder 120 (Schlingfeder) inaktiv hält. Dadurch kann eine Selbsthemmung im Getriebe für die Betriebsbremsfunktion unterbunden werden. Es ist dann ein Kraftfluss durch das Getriebe in beide Richtungen zwischen motorischem Antrieb und Mutter-Spindel-Anordnung möglich. Erst wenn die Formfeder 130 hinreichend stark komprimiert ist, wird sozusagen die Schraubenfeder 120 (Schlingfeder) in ihrer Funktion aktiv und blockiert einen Kraftfluss durch das Getriebe von der Mutter-Spindel-Anordnung zum Elektromotor hin. Die Formfeder 130 ist also in dem gezeigten Ausführungsbeispiel erforderlich, weil beide Bremsfunktionen - Betriebsbremsfunktion und Feststellbremsfunktion - bereitgestellt werden sollen.

Ausgehend von diesem Verständnis für den Stand der Technik gemäß den Figuren 1 bis 5 setzt die Erfindung an einer Optimierung dieser Ausführungsform an. Ein erstes Ausführungsbeispiel der Erfindung ist schematisch in dem Blockschaltbild gemäß Figur 6 gezeigt.

Man erkennt darin, dass der von einer elektrischen Versorgungsquelle EV angetriebene Elektromotor EM über eine Ausgangswelle ein Motordrehmoment M_{M} und mit einer Motorwinkelgeschwindigkeit ω_{M} an eine erste Getriebestufe GS1 der Getriebeanordnung abgibt. Innerhalb des Elektromotors EM, d.h. integriert in diesen, ist die Selbsthemmungsvorrichtung SHV angeordnet, mit der Reaktionskräfte R an das Gehäuse des Elektromotors EM und von diesem an den Gehäuseabschnitt AG abgeleitet werden. Die Getriebeanordnung umfasst der Getriebestufe GS1 nachgeschaltet zwei weitere Getriebstufen GS2 und GS3. Der Gehäuseabschnitt AG is der Getriebeanordnung mit den einzelnen Getriebestufen GS1 bis GS3 und dem Elektromotor EM zugeordnet ist. Dieser Gehäuseabschnitt AG kann auch als Aktuator-Gehäuseabschnitt AG bezeichnet werden. Die Reaktionskräfte R lassen sich dann durch geeignete Kopplung des Aktuator-Gehäuseabschnitts AG und des nachfolgend näher erläuterten Gehäuseabschnitts der Bremse BG entsprechend dem strichlierten Pfeil R' auf den Gehäuseabschnitt der Bremse BG ableiten.

Von der Getriebestufe GS3 ausgehend wird ein Drehmoment M_{A} mit einer Aktuatorwinkelgeschwindigkeit ω_{A} an die Bremse übertragen. Die Bremse umfasst eine Spindel-Mutter-Anordnung SM eines Kugelgewindetriebs und einen Bremskolben BK, von dem ausgehend die Bremsbetätigungskraft F_{B} mit einer Betätigungsgeschwindigkeit v_{B} auf die Bremsbeläge übertragen wird. Von diesem Bremskolben BK wirken Reaktionskräfte im Bremsfall zurück.

Die Besonderheit dieser Ausführungsform liegt darin, dass die Selbsthemmungsvorrichtung SHV innerhalb des Elektromotors angeordnet ist, so dass die drei Getriebestufen GS1, GS2 und GS3 der Selbsthemmungsvorrichtung SHV nachgeschaltet sind ist. Dies macht es möglich, das Übersetzungsverhältnis aller Getriebestufen GS1, GS2 und GS3 der Getriebeanordnung als Untersetzung für die in einer Feststellbremssituation von dem Bremskolben BK rückwirkenden Reaktionskräfte auszunützen, so dass die letztendlich auf die Selbsthemmungsvorrichtung SHV wirkenden Reaktionskräfte deutlich reduziert sind. Dadurch kann die Selbsthemmungsvorrichtung SHV verhältnismäßig klein dimensioniert werden, was insbesondere Bauraum einspart. Ferner bietet diese Anordnung der Selbsthemmungsvorrichtung SHV Freiheiten bei der Gestaltung und Unterbringung der Selbsthemmungsvorrichtung SHV innerhalb des Elektromotors EM.

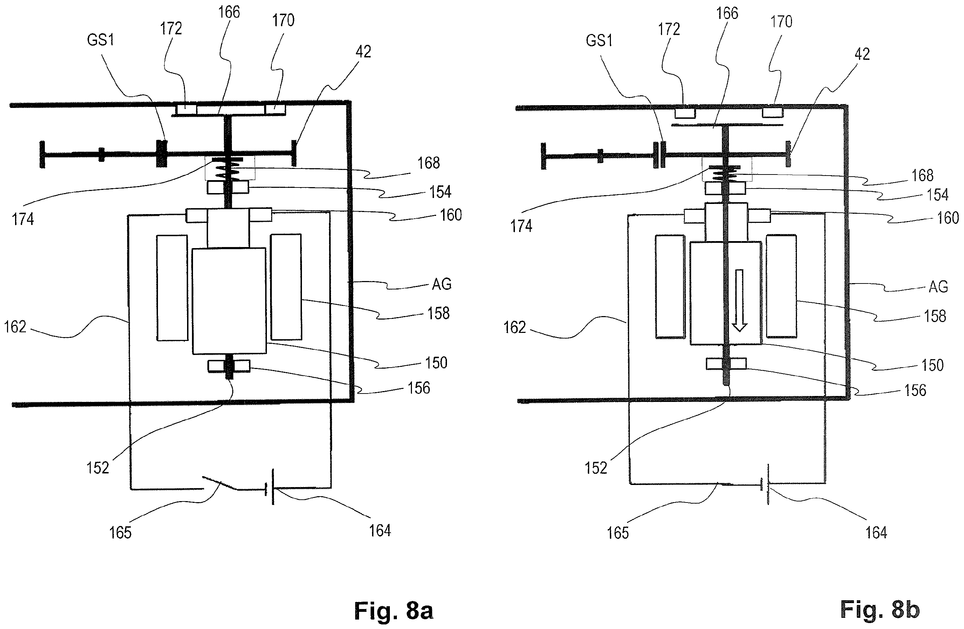

Ausführungsbeispiele zur Implementierung des erfindungsgemäßen Gedankens der Integrierung der Selbsthemmungsvorrichtung in der Elektromotor sind in den schematischen Figuren 7a, 7b und 8a, 8b gezeigt.

In Fig. 7a erkennt man schematisch dargestellt den Elektromotor EM zusammen mit einem Teil der Getriebeanordnung, d.h. der ersten Getriebestufe GS1 innerhalb des Aktuatorgehäuses AG. Der Elektromotor weist einen Anker 150 mit einer Spulenwicklung in an sich bekannter Weise auf, wobei der Anker 150 auf einer Motorwelle 152 drehfest angebracht ist. Die Motorwelle 152 ist in zwei gehäusefesten Lagern 154, 156 drehbar, jedoch in axialer Richtung verlagerbar gelagert. Sie ist über ein drehmomentübertragendes Profil drehfest, jedoch axial verschiebbar in einem Zahnrad 42 der ersten Getriebestufe GS1 aufgenommen.

Um den Anker 150 herum sind in an sich bekannter Weise Polschuhe 158 des Stators angeordnet. Um einen Teil des Ankers herum ist am Stator ein Elektromagnet 160 angeordnet, der über einen elektrischen Schaltkreis 162 mit einer Spannungsquelle 164 und einem Schalter 165 bestromt werden kann. Der Elektromagnet 160 ist derart ausgebildet, dass er bei Bestromung eine Axialkraft auf den Anker 150 ausübt, worauf im Folgenden noch im Detail eingegangen wird. Ferner erkennt man, dass an dem getriebefernen Ende der Motorwelle 152 eine Reib- oder Bremsscheibe 166 drehfest angebracht ist. Die Motorwelle 152 ist im Rahmen ihrer axialen Beweglichkeit über eine Druckfeder 168 in Fig. 7a nach unten vorgespannt. Dadurch wird mit der Vorspannkraft die Bremsscheibe 166 gegen Reibbeläge 170, 172 gedrückt, so dass die Motorwelle 152 gegen eine Drehbewegung durch die zwischen der Bremsscheibe 166 und den Bremsbelägen 170, 172 federkraftbedingt entstehenden Reibkräfte blockiert wird.

Fig. 7a zeigt also den unbestromten Zustand des Elektromagneten 160 (der Schalter 165 ist geöffnet), in dem eine Drehbewegung durch die zwischen der Bremsscheibe 166 und den Bremsbelägen 170, 172 federkraftbedingt entstehenden Reibkräfte blockiert ist. Die Selbsthemmungsvorrichtung SHV ist also aktiv.

Wird nun der Schalter 165 geschlossen, wie in Fig. 7b gezeigt, so wird der Elektromagnet 160 bestromt, so dass er in Fig. 7b in Richtung nach oben eine Axialkraft auf den Anker 156 ausübt, wie durch den Pfeil angedeutet. Die Axialkraft übersteigt die Federkraft der Druckfeder 168 und zieht die Motorwelle 152 in Fig. 7b nach oben. Dadurch gelangt die Bremsscheibe 166 außer Eingriff mit den Reibbelägen 170, 172, so dass die Motorwelle 152 in den Lagern 154, 156 frei drehbar ist. In der Folge kann bei einer Bestromung des Elektromotors EM der Bremskolben BK (Fig. 6) ungehindert in eine Sollposition verlagert werden. Dies gilt sowohl für das Erzielen als auch für das Aufheben einer Bremskraft F_{B}.

Sobald der Schalter 165 wieder geöffnet wird, wird der Elektromagnet 160 deaktiviert und die Motorwelle 152 verschiebt sich unter Wirkung der Feder 168 in den in Fig. 7a gezeigten Zustand. Dies bedeutet, dass die Reib- bzw. Bremsscheibe 166 wieder gegen die Reibbeläge 170, 172 gedrückt wird, so dass eine Motorbewegung sowie eine Rückstellbewegung blockiert wird.

Es tritt bei dieser Ausführungsform der Erfindung sozusagen ein über den Schalter 165 abschaltbarer Selbsthemmungseffekt ein, wobei die Selbsthemmungsvorrichtung SHV bei dieser Ausführungsform schaltbar ist und die Komponenten schaltbarer Elektromagnet 160, Druckfeder 168, Bremsscheibe 166 und Reibbeläge 170, 172 umfasst.

Es sei angemerkt, dass der Schalter 165 über eine Steuerung separat angesteuert werden kann oder synchron mit der Bestromung des Elektromotors EM geschlossen werden kann.

Die Ausführungsform gemäß Fig. 8a und 8b zeigt eine ähnliche Funktionsweise, wie die Ausführungsform gemäß Figuren 7a und 7b, jedoch unterscheidet sie sich in der Anordnung der Reib- bzw. Bremsscheibe 166 und der Reibbeläge 170, 172 sowie der Feder. Die Bremsscheibe 166 ist an dem getriebenahen axialen Ende der Motorausgangswelle 152 drehfest angebracht. Der Bremsscheibe 152 gegenüberliegend sind die Reibbeläge 170, 172 angebracht. Die Druckfeder 168 greift an einem mit der Motorwelle 152 fest verbundenen Ansatz 174 an, und übt auf die Motorwelle 152 eine Druckkraft nach oben aus. In dem in Fig. 8a gezeigten unbestromten Zustand des Elektromagneten 160 wird mit der Vorspannkraft der Feder 168 die Bremsscheibe 166 gegen die Reibbeläge 170, 172 gedrückt, so dass die Motorwelle 152 gegen eine Drehbewegung durch die zwischen der Bremsscheibe 166 und den Bremsbelägen 170, 172 federkraftbedingt entstehenden Reibkräfte blockiert wird, was als Selbsthemmungseffekt bezeichnet wird.

Der Elektromagnet 160 wirkt bei dieser Ausführungsform derart, dass er bei Bestromung die Motorwelle 152 gegen die Wirkung der Federkraft der Druckfeder 168 in Fig. 8b nach unten zieht, wie durch einen Pfeil angedeutet. Dadurch wird die Blockierwirkung der gegen die Reibbeläge 170, 172 drückenden Bremsscheibe 166 aufgehoben und die Anordnung kann sich selbsthemmungsfrei drehen.

Die Vorteile der Erfindung liegen also in der Anordnung der Selbsthemmungsvorrichtung SHV innerhalb des motorischen Antriebs EM und vor der Getriebeanordnung mit den einzelnen Getriebestufen GS1 bis GS3 relativ zu den eigentlichen Komponenten der Bremse, nämlich dem Kugelgewindetrieb (Spindel-Mutter-Anordnung SM). Durch diese Anordnung lassen sich Übersetzungen der gesamten Getriebeanordnung mit ihren Getriebestufen GS1 bis GS3 vorteilhaft ausnutzen, um die Reaktionskräfte in der Selbsthemmungsvorrichtung zu reduzieren. Ferner bietet diese Anordnung größere Variabilität zur Bauraumeinsparung. Die Selbsthemmungsvorrichtung lässt sich je nach Bedarf und zu Verfügung stehendem an dem einen oder anderen axialen Ende der Motorwelle 152 anordnen. Die Ableitung der Reaktionskräfte erfolgt über die Reibbeläge 170, 172 unmittelbar in das Aktuatorgehäuse, was vorteilhaft ist.

## Patentansprüche

1. Kraftfahrzeugbremse, insbesondere kombiniert hydraulisch und elektromechanisch betätigbare Kraftfahrzeugbremse, mit einer Aktuatorbaugruppe (10) umfassend:
- ein Gehäuse (12),
- ein relativ zu dem Gehäuse (12) verlagerbares Stellglied (18) zum hydraulischen oder elektromechanischen Verlagern eines Bremsbelags,
- einen motorischen Antrieb (EM, 22),
- eine zwischen dem motorischen Antrieb (EM, 22) und dem verlagerbaren Stellglied (18) angeordnete Verlagerungsmechanik,
- eine der Verlagerungsmechanik zugeordnete Getriebeanordnung (26), und
- eine separate Selbsthemmungsvorrichtung (SHV), die dazu ausgebildet ist, die Verlagerungsmechanik bei Bedarf zu blockieren,
wobei die Verlagerungsmechanik einen Kugelgewindetrieb (28) mit einer Spindel (76) und einer Mutter (86) aufweist, und wobei wahlweise die eine Komponente von Spindel (76) und Mutter (86) drehantreibbar ist und die jeweils andere Komponente von Spindel (76) und Mutter (86) zur Verlagerung des Stellglieds (18) durch Drehantreiben einer Komponente von der Spindel (76) und Mutter (86) innerhalb des Gehäuses (12) linear verlagerbar ist,
wobei die Selbsthemmungsvorrichtung (SHV) in den motorischen Antrieb (EM) integriert ist,
**dadurch gekennzeichnet, dass** die Selbsthemmungsvorrichtung (SHV) eine Bremsscheibe (166) aufweist, die mit einer den Anker tragenden Ausgangswelle (152) des motorischen Antriebs (EM) drehfest gekoppelt ist, wobei dem Gehäuse (AG) des Aktuators oder dem Gehäuse des motorischen Antriebs wenigstens ein Reibbelag (170, 172) zugeordnet ist, der zum Erzielen der Selbsthemmung in Wechselwirkung mit der Bremsscheibe (166) bringbar ist.

2. Kraftfahrzeugbremse nach Anspruch 1,
**dadurch gekennzeichnet, dass** die Getriebeanordnung wenigstens zwei Getriebestufen (GS1, GS2, GS3) aufweist.

3. Kraftfahrzeugbremse nach Anspruch 1 oder 2,
**dadurch gekennzeichnet, dass** die Selbsthemmungsvorrichtung (SHV) in Abhängigkeit von einer Bestromung des motorischen Antriebs (EM) aktivierbar und deaktivierbar ist.

4. Kraftfahrzeugbremse nach einem der vorangehenden Ansprüche,
**dadurch gekennzeichnet, dass** die Selbsthemmungsvorrichtung (SHV) über einen Federmechanismus (168) in einen Zustand vorgespannt ist, in dem sie die Verlagerungsmechanik blockiert.

5. Kraftfahrzeugbremse nach Anspruch 3 und Anspruch 4,
**dadurch gekennzeichnet, dass** die Selbsthemmungsvorrichtung (SHV) mit einem Elektromagneten (160) versehen ist, der bei Bestromung des motorischen Antriebs (EM) aktiviert wird und gegen die Wirkung des Federmechanismus (168) die Selbsthemmungsvorrichtung (SHV) in einen nicht blockierenden Zustand schaltet.

6. Kraftfahrzeugbremse nach Anspruch 5,
**dadurch gekennzeichnet, dass** der Elektromagnet (160) in den motorischen Antrieb (EM) integriert ist.

7. Kraftfahrzeugbremse nach einem der vorangehenden Ansprüche,
**dadurch gekennzeichnet, dass** die Selbsthemmungsvorrichtung (SHV) derart angeordnet ist, dass die beim Blockieren der Verlagerungsmechanik auftretenden Reaktionskräfte mittelbar oder unmittelbar in das Gehäuse (AG) des Aktuators oder in ein Gehäuse des motorischen Antriebs ableitbar sind.

8. Kraftfahrzeugbremse nach einem der vorangehenden Ansprüche,
**dadurch gekennzeichnet, dass** die Ausgangswelle (152) drehbar und axial verlagerbar gelagert ist, wobei die Selbsthemmungsvorrichtung (SHV) nach Maßgabe einer Bestromung des motorischen Antriebs (EM) durch axiales verlagern der Ausgangswelle (152) zwischen einem blockierenden Zustand und einem nicht blockierenden Zustand hin- und her schaltbar ist.

9. Kraftfahrzeugbremse nach einem der vorangehenden Ansprüche,
**dadurch gekennzeichnet, dass** die Getriebeanordnung (26) einen Planetengetriebemechanismus (34) aufweist.

10. Kraftfahrzeugbremse nach Anspruch 9,
**dadurch gekennzeichnet, dass** der motorische Antrieb (EM, 22) eine Ausgangswelle (32) aufweist, die mit einem Sonnenrad des Planetengetriebemechanismus (34) antriebsmäßig gekoppelt ist, wobei ein Hohlrad (44) des Planetengetriebemechanismus (34) gehäusefest angeordnet ist, und wobei Planetenräder (42) des Planetengetriebemechanismus (34) an einem im Gehäuse (12) drehbar gelagerten Planetenträger (38) drehbar gelagert sind.

## Claims

1. The motor vehicle brake, in particular combined hydraulically and electromechanically operable automotive vehicle brake, with an actuator module (10), comprising:
- a housing (12),
- an actuator (18) movable relative to the housing (12) in order to hydraulically or electromechanically move a brake lining,
- a motor drive (EM, 22),
- a moving assembly arranged between the motor drive (EM, 22) and the movable actuator (18),
- a gear arrangement (26) associated with the moving assembly, and
- a separate self-locking device (SHV), which is designed to block the moving assembly on demand,
wherein the moving assembly has a ball screw arrangement (28) with a spindle (76) and a nut (86), and wherein one of the components, the spindle (76) and the nut (86), is rotatably driven, and the respective other one of the components, the spindle (76) and the nut (86), is linearly movable for moving the actuator (18) by rotatably driving one of the components, the spindle (76) and the nut (86) inside the housing (12),
wherein the self-locking device (SHV) is integrated into the motor drive (EM), **characterized in that** the self-locking device (SHV) has a brake disc (166) which is coupled non-rotatably to an output shaft (152) of the motor drive (EM), which output shaft carries the armature, at least one friction lining (170, 172) being assigned to the housing (AG) of the actuator or to the housing of the motor drive, which friction lining can be brought into interaction with the brake disc in order to achieve self-locking.

2. The motor vehicle brake according to claim 1,
**characterized in that** the gear arrangement has at least two gear speeds (GS1, GS2, GS3).

3. The motor vehicle brake according to claim 1 or 2,
**characterized in that** the self-locking device (SHV) can be activated and deactivated as a function of energization of the motor drive (EM).

4. The motor vehicle brake according to any one of the preceding claims, **characterized in that** the self-locking device (SHV) is prestressed by means of a spring mechanism (168) into a state in which it blocks the displacement mechanism.

5. The motor vehicle brake according to claim 3 and claim 4,
**characterized in that** the self-locking device (SHV) is provided with an electromagnet (160), which is activated on energization of the motor drive (EM) and switches the self-locking device (SHV) into a non-locking state against the action of the spring mechanism (168).

6. The motor vehicle brake according to claim 5,
**characterized in that** the electromagnet (160) is integrated into the motor drive (EM).

7. The motor vehicle brake according to any one of the preceding claims, **characterized in that** the self-locking device (SHV) is disposed in such a way that the reactive forces occurring during the blocking of the displacement mechanism can be derived directly or indirectly into the housing (AG) of the actuator or into the housing of the motor drive.

8. The motor vehicle brake according to any one of the preceding claims, **characterized in that** the output shaft (152) is mounted rotatably and axially displaceably, wherein the self-locking device (SHV) can be switched back and forth between a locking state and a non-locking state in accordance with the energization of the motor drive (EM) by axial displacement of the output shaft (152).

9. The motor vehicle brake according to any one of the preceding claims, **characterized in that** the gear arrangement (26) has a planetary gear mechanism (34).

10. The motor vehicle brake according to claim 9,
**characterized in that** a motor drive (EM, 22) has an output shaft (32), which is coupled to a sun wheel of the planetary gear mechanism (34) with regard to the drive, wherein a hollow wheel (44) of the planetary gear mechanism (34) is arranged fixedly on the housing, and wherein planetary wheels (42) of the planetary gear mechanism (34) are rotatably mounted on a planetary carrier (38), which is also rotatably mounted in the housing (12).

## Revendications

1. Frein de véhicule automobile, en particulier un frein de véhicule automobile pouvant être actionné de manière hydraulique et électromécanique combinée, comprenant un ensemble actionneur (10) qui comporte :
- un boîtier (12),
- un organe d'actionnement (18) déplaçable par rapport au boîtier (12) pour déplacer hydrauliquement ou électro-mécaniquement une garniture de frein,
- un entraînement à moteur (EM, 22)
- un mécanisme de déplacement disposé entre l'entraînement à moteur (EM, 22), et l'organe d'actionnement (18) déplaçable,
- un système d'engrenage (26) associé au mécanisme de déplacement, et
- un dispositif d'autoblocage (SHV) séparé qui est conçu pour bloquer au besoin le mécanisme de déplacement,
le mécanisme de déplacement présentant une vis à billes (28) comprenant une broche (76) et un écrou (86), et un composant parmi la broche (76) et l'écrou (86) pouvant au choix être entraîné en rotation et l'autre composant parmi la broche (76) et l'écrou (86) pouvant être déplacé de manière linéaire à l'intérieur du boîtier (12) pour déplacer l'organe d'actionnement (18) par entraînement en rotation d'un composant parmi la broche (76) et l'écrou (86),
le dispositif d'autoblocage (SHV) étant intégré dans l'entraînement à moteur (EM), **caractérisé en ce que** le dispositif d'autoblocage (SHV) présente un disque de frein (166) qui est couplé fixe en rotation avec l'arbre de sortie (152) portant le rotor, au moins une garniture de friction (170, 172), laquelle peut être amenée à interagir avec le disque de frein (166) pour obtenir l'autoblocage, étant associée au boîtier (AG) de l'actionneur ou au boîtier de l'entraînement à moteur.

2. Frein de véhicule automobile selon la revendication 1,
**caractérisé en ce que** l'système d'engrenage présente au moins deux étages de multiplication (GS1, GS2, GS3).

3. Frein de véhicule automobile selon la revendication 1 ou 2,
**caractérisé en ce que** l'autoblocage (SHV) peut être activé ou désactivé en fonction de l'alimentation de l'entraînement à moteur (EM).

4. Frein de véhicule automobile selon l'une des revendications précédentes,
**caractérisé en ce que** le dispositif d'autoblocage (SHV) est précontraint à l'aide d'un mécanisme à ressort (168) dans un état dans lequel il bloque le mécanisme de déplacement.

5. Frein de véhicule automobile selon la revendication 3 et la revendication 4,
**caractérisé en ce que** le dispositif d'autoblocage (SHV) est doté d'un électro-aimant (160) qui est activé lorsqu'est alimenté l'entraînement à moteur (EM) et qui commute dans un état non bloquant le dispositif d'autoblocage (WHV) contre l'action du mécanisme à ressort (168).

6. Frein de véhicule automobile selon la revendication 5,
**caractérisé en ce que** l'électro-aimant (160) est intégré dans l'entraînement à moteur (EM).

7. Frein de véhicule automobile selon l'une des revendications précédentes,
**caractérisé en ce que** le dispositif d'autoblocage (SHV) est disposé de telle sorte que les forces de réaction survenant lors du blocage du dispositif de déplacement peuvent être directement ou indirectement dérivées dans le boîtier (AG) de l'actionneur ou dans un boîtier de l'entraînement à moteur.

8. Frein de véhicule automobile selon l'une des revendications précédentes,
**caractérisé en ce que** l'arbre de sortie (152) est monté mobile en rotation et axialement déplacable, le dispositif d'autoblocage (SHV) pouvant être commuté de manière alternante entre un état bloquant et un état non bloquant par déplacement axial de l'arbre de sortie (152), en fonction de l'alimentation de l'entraînement à moteur (EM).

9. Frein de véhicule automobile selon l'une des revendications précédentes,
**caractérisé en ce que** l'système d'engrenage (26) présente un mécanisme d'engrenage planétaire (34).

10. Frein de véhicule automobile selon la revendication 9,
**caractérisé en ce que** l'entraînement à moteur (EM, 22) présente un arbre de sortie (32) qui est couplé de manière entraînée avec une roue soleil du mécanisme d'engrenage planétaire (34), une roue creuse (44) du mécanisme d'engrenage planétaire (34) étant disposée fixe sur boîtier, et des roues planétaires (42) du mécanisme d'engrenage planétaire (34) étant montées mobiles en rotation sur un porte-planétaire (38) monté mobile en rotation dans le boîtier (12).
